# EUROPÄISCHE PATENTSCHRIFT

(11) **EP 3 665 040 B1**
(45) Veröffentlichungstag und Bekanntmachung des Hinweises auf die Patenterteilung: **21.12.2022**
(21) Anmeldenummer: 18752086.1
(22) Anmeldetag: 24.07.2018
(51) Int. Cl.: B60Q 1/08, B60Q 1/14

(54) **FAHRZEUGSCHEINWERFER UND FAHRZEUGSTEUERUNG**
VEHICLE HEADLAMP AND VEHICLE CONTROL
PHARE ET COMMANDE DE VÉHICULE

(30) Priorität: 10.08.2017 AT 506682017
(43) Veröffentlichungstag der Anmeldung: 17.06.2020
(73) Patentinhaber: ZKW Group GmbH, 3250 Wieselburg (AT)
(72) Erfinder: LAHMER, Martin, 3663 Münichreith-Laimbach (AT)
(74) Vertreter: Patentanwaltskanzlei Matschnig & Forsthuber OG
(86) Internationale Anmeldenummer: PCT/AT2018/060158
(87) Internationale Veröffentlichungsnummer: WO 2019/028483

(56) Entgegenhaltungen:
- EP-A2- 1 433 655
- EP-A2- 2 772 682
- DE-A1-102010 048 659
- DE-A1-102016 125 541
- DE-U1-202016 105 624
- FR-A1- 3 008 477
- US-A1- 2004 114 379
- US-A1- 2017 144 591

## Beschreibung

Die Erfindung betrifft einen Fahrzeugscheinwerfer nach Anspruch 1.

Ferner betrifft die Erfindung eine Fahrzeugsteuerung nach Anspruch 7.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, das rasch geändert und den jeweiligen Verkehrs-, Straßen- und Lichtbedingungen angepasst werden kann. Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder auch darüber hinaus erstreckt. Prinzipiell wird das Lichtbild im hier verwendeten Sinn anhand einer Projektion auf eine vertikale Fläche entsprechend der einschlägigen Normen, die sich auf die KFZ-Beleuchtungstechnik beziehen, definiert. Ferner soll das erzeugte Lichtbild an unterschiedliche Verkehrssituationen anpassbar sein.

Es wurden unter anderem Scheinwerfer entwickelt, in denen eine variabel ansteuerbare Reflektorfläche aus einer Mehrzahl von Mikrospiegeln gebildet ist und auf gewählte Bereiche eine Lichtemission, die von einer Lichtquelleneinheit erzeugt wird, in Abstrahlrichtung des Scheinwerfers reflektiert. Derartige Leuchteinrichtungen sind im Fahrzeugbau wegen ihrer sehr flexiblen Lichtfunktionen vorteilhaft, da für unterschiedliche Leuchtbereiche die Beleuchtungsstärke individuell geregelt werden kann und beliebige Lichtfunktionen mit unterschiedlichen Lichtverteilungen realisiert werden können, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung, eine Zusatzfernlicht-Lichtverteilung oder zur Ausbildung von blendfreiem Fernlicht (auch bekannt als Adaptive Driving Beam Headlighting System, ADB).

Für die Mikrospiegelanordnung kommt die sogenannte Digital Light Processing (DLP^{®}) Projektionstechnik zur Anwendung, bei der Bilder dadurch erzeugt werden, dass ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert. Basis für diese Technik bildet ein elektronisches Bauteil, das eine Anordnung von Mikrospiegeln in Form einer Matrix von Spiegeln und deren Ansteuerungstechnik enthält und als "Digital Micromirror

Device" (DMD) bezeichnet wird. Bei einem DMD-Mikrosystem handelt es sich um einen Flächenlichtmodulator (Spatial Light Modulator, SLM), der aus matrixförmig angeordneten Mikrospiegelaktoren, das heißt verkippbaren spiegelnden Flächen besteht, beispielsweise mit einer Kantenlänge von etwa 16 µm oder auch darunter. Die Spiegelflächen sind derart konstruiert, dass sie durch die Einwirkung elektrostatischer Felder beweglich sind. Jeder Mikrospiegel ist in seinem Kippwinkel einzeln verstellbar und weist in der Regel zwei stabile Endzustände auf, zwischen denen innerhalb einer Sekunde bis zu 5000 mal gewechselt werden kann. Die einzelnen Mikrospiegel können jeweils beispielsweise durch eine Pulsweiten-Modulation (PWM) angesteuert werden, um in der Hauptstrahlrichtung der DMD-Anordnung weitere Zustände der Mikrospiegel abzubilden, deren zeitlich gemittelte Reflektivität zwischen den beiden stabilen Zuständen des DMD liegt. Die Anzahl der Spiegel entspricht der Auflösung des projizierten Bilds, wobei ein Spiegel ein oder mehrere Pixel darstellen kann. Mittlerweile sind DMD-Chips mit hohen Auflösungen im Megapixel-Bereich erhältlich. Den verstellbaren Einzelspiegeln zugrunde liegende Technologie ist die Micro-Electro-Mechanical-Systems-(MEMS) Technologie.

Während die DMD-Technologie zwei stabile Spiegel-Zustände aufweist, und durch Modulation zwischen beiden stabilen Zuständen der Reflexionsfaktor eingestellt werden kann, weist die "Analog Micromirror Device" (AMD) Technologie die Eigenschaft auf, dass die Einzelspiegel in variablen Spiegelpositionen eingestellt werden können, die dort jeweils in einem stabilen Zustand sind.

Bei hochauflösenden Fahrzeugscheinwerfern kann es nötig sein, dass komplexe und detailreiche Lichtverteilungen, die beispielsweise durch ein DMD-System projiziert werden, innerhalb der Elektronik des Scheinwerfers berechnet und/ oder gespeichert werden.

Hierfür wird häufig eine leistungsstarke Mikroelektronikbaugruppe benötigt, die als komplexes System einen erhöhten Stromverbrauch und eine aufwändige Kühlvorrichtung benötigt, was einen großen Bauraum erfordert und ferner zu einem hohen Gewicht, hohen Entwicklungs-, Montage- und Wartungskosten führt und dadurch die Integration in ein Fahrzeug erschwert. Aus den EP 1 433 655 A2, DE 20 2016 105624 U1, US 2004/114379 A1, EP 2 772 682 A2 sind Fahrzeugscheinwerfer bekannt.

Es ist Aufgabe der Erfindung die genannten Nachteile zu überwinden.

Die Aufgabe wird durch einen Fahrzeugscheinwerfer gemäß Anspruch 1.

Zum besseren Verständnis und Lesbarkeit der Beschreibung und der Ansprüche wird auf die Unterscheidung zwischen einem Merkmal in der Einzahl und Mehrzahl nicht unterschieden. Trotzdem sind die Merkmale jeweils in der Einzahl und Merkmal gemeint, beziehungsweise beliebige Kombinationen davon.

Durch die genannten Merkmale kann erreicht werden, dass eine detailreiche Beschreibung einer Lichtverteilung für einen Fahrzeugscheinwerfer in einer Recheneinheit berechnet wird, die nicht im Scheinwerfer gelegen ist. Vorzugsweise wird diese Recheneinheit auch von anderen Fahrzeugsystemen gemeinsam für Berechnungsaufgaben benützt. Das Datenvolumen, das aus der Beschreibung der berechneten Lichtverteilung resultiert, weist häufig eine zu große Menge auf, als dass diese rasch über den Steuerkanal eines Fahrzeugsystems übertragen werden kann. Echtzeiterfordernisse von Steuerkanal-Nachrichten können den Steuerkanal zur Übertragung solch großer Datenmengen ungeeignet machen. Durch den erfindungsgemäßen Objektkanal wird ein zusätzlicher Übertragungskanal zwischen einem elektronischen System des Fahrzeugs und dem Fahrzeugscheinwerfer geschaffen, der eine große Übertragungsbandbreite für Nachrichten aufweist, der darüber hinaus auch für eine Echtzeit-Übertragung konfiguriert werden kann, beispielsweise indem ein Echtzeit-Protokoll im Übertragungskanal des Objektkanals angewandt wird.

Es ist günstig, wenn das erste elektronische Fahrzeugsystem ein Bordnetzsteuergerät und/ oder das zweite elektronische Fahrzeugsystem ein zentrales Fahrerassistenzsystem sind, da in diesen Systemen zahlreiche Sensoren und Steuereinrichtungen umfasst sind, welche Daten generieren können, die wiederum vom erfindungsgemäßen Scheinwerfer genutzt werden können. Dadurch kann der Scheinwerfer weniger komplex aufgebaut sein und das Gewicht, die Baugröße, die Entwicklungs- und Herstellungskosten geringer sein.

Erfindungsgemäß ist es vorgesehen, dass das zumindest eine erste Lichtmodul und/ oder das zumindest eine zweite Lichtmodul eine steuerbare, matrixförmigen Anordnung von Leuchtdioden oder Mikrospiegeln sind, wobei das zumindest eine zweite Lichtmodul eine höhere Bildauflösung aufweist, als das zumindest eine erste Lichtmodul. Dadurch kann ein Fahrzeugscheinwerfer geschaffen werden, welcher zumindest zwei steuerbare Lichtverteilungen jeweils unterschiedlicher Bildauflösung in einer besonders günstigen Weise zu einem Scheinwerfer kombiniert.

Außerdem ist es erfindungsgemäß vorgesehen, dass im ersten und/ oder zweiten Speicher die ersten und/ oder zweiten Lichtdaten gespeichert sind, die zumindest eine Lichtfunktion mit jeweils einer vordefinierten Lichtverteilung des Fahrzeugscheinwerfers und/ oder vordefinierte grafische Symbole umfassen, und vorzugsweise die ersten und/ oder zweiten Lichtdaten vom ersten und/ oder zweiten elektronischen Fahrzeugsystem teilweise empfangen wurden. Dadurch kann erreicht werden, dass Grundlichtverteilungen des Fahrzeugscheinwerfers, wie beispielsweise eine Abblendlicht- oder eine Fernlicht-Lichtverteilung, bereits bei der Produktion des Scheinwerfers beispielsweise in Form einer Lichtmatrix, deren Werte eine Lichtverteilung repräsentieren und die Anzahl der Lichtmatrixelemente der Anzahl der steuerbaren optischen Elemente des optoelektronischen Bauteils, wie ein DMD, entspricht, diese Lichtmatrix im Scheinwerfer einprogrammiert wird und nicht berechnet werden muss. Es kann jedoch auch vorgesehen sein, dass die Lichtverteilung nur durch eine analytische Beschreibung eines Verlaufs einer Lichtverteilung, beispielsweise durch ein Polynom, erfolgt und nur die Parameter des Polynoms im Speicher abgelegt sind, um Speicher einzusparen. In diesem Fall kann eine Lichtmatrix aus dem Polynom durch den Mikroprozessor berechnet werden und über die Ausgabeeinheit an das DMD ausgegeben werden.

In einer Weiterbildung der Erfindung kann es vorgesehen sein, dass die Nachricht vorzugsweise unter Verwendung der TCP- ("Transmission Control Protocol") oder der UDP-Technologie ("User Datagram Protocol") über den Objektkanal übermittelt wird, welcher ein Zweig eines Ethernet-Netzwerks, ein Zweig eines Echtzeit-Ethernet-Netzwerks, bevorzugt nach dem Precision Time Protocol, oder ein MOST-Bus ("Media Oriented Systems Transport") ist. Dadurch kann erreicht werden, dass der Objektkanal besonders einfach realisiert werden kann und dabei günstige Übertragungseigenschaften erzielt werden können.

Es ist erfindungsgemäß vorgesehen, dass der Steuerkanal ein CAN-Bus ("Controller Area Network") eines Fahrzeugs ist. Dadurch kann erreicht werden, dass die Steuerung der Lichtfunktionen oder Betriebsmodi des Scheinwerfers durch ein standardisiertes Verfahren erfolgt und keine individuelle Anpassung der Steuerung an die Erfindung benötigt wird.

Es ist besonders günstig, wenn die Nachricht zumindest eine Ziel-Adresse, zumindest eine Objekt-Identifikation und zumindest eine Objekt-Beschreibung umfasst und die Objektkanal-Steuereinheit zumindest eine Empfangskennung umfasst, die der Ziel-Adresse entspricht und vorzugsweise eine IP-Adresse ("Internet Protocol") ist. Dadurch kann eine besonders einfache Realisierung erreicht werden.

Außerdem ist es besonders günstig, wenn der Mikroprozessor dazu eingerichtet ist, aus der Objekt-Beschreibung zumindest eine Lichtmatrix zu bilden, welche eine Lichtverteilung eines Fahrzeugscheinwerfers repräsentiert. Dadurch kann eine besonders einfache Realisierung der Erfindung erreicht werden.

Es ist vorteilhaft, wenn die Objekt-Beschreibung selbst eine Lichtmatrix umfasst. Auch dadurch kann eine besonders einfache Realisierung der Erfindung erreicht werden, indem durch den Mikroprozessor nur geringe oder gar keine Bearbeitungen oder Berechnungen, beispielsweise durch Konvertierung von Modellen zur Beschreibung von Lichtverteilungen, erforderlich sind.

Eine bevorzugte Weiterbildung der Erfindung ist durch eine Fahrzeugsteuerung gebildet, umfassend zumindest einen erfindungsgemäßen Fahrzeugscheinwerfer, wobei das erste und zweite elektronische System dynamisch eine Lichtverteilung bestimmt, die in Form einer Nachricht an den Fahrzeugscheinwerfer über den Objektkanal übertragen wird. Dadurch kann erreicht werden, dass die Lichtverteilung durch das elektronische System gebildet ist, das beispielsweise als eine gemeinsame Einheit auch für andere Fahrzeugsysteme, wie ein Navigationssystem, ausgeführt ist.

Ferner ist es günstig, wenn das das erste und zweite elektronische System zumindest einen Sensor umfasst, der eingerichtet ist, Sensordaten zu erfassen und daraus zumindest eine Lichtverteilung bestimmt. Dadurch kann erreicht werden, dass die Lichtverteilung an, durch Sensoren detektierte Ereignisse angepasst werden kann und beispielsweise dynamisch optische Signalisierungen beinhaltet.

Dabei ist es besonders günstig, wenn der Sensor ein Kamera-Sensor, ein Infrarot-Sensor, ein Ultraschall-Sensor, ein Radar-Sensor, ein Positions-Sensor eines Satelliten-Navigationssystems, ein Bewegungs-Sensor, ein Beschleunigungs-Sensor, ein Rad-Sensor oder ein Magnetfeld-Sensor ist, da häufig in einem Fahrzeug bereits vorhandene Sensoren gemeinsam für das erfindungsgemäße elektronische System genutzt werden können.

Eine besonders bevorzugte Weiterbildung der Erfindung ist durch ein ferner umfasstes Erkennungssystem gebildet, das eingerichtet ist, Erkennungsdaten eines Öffnungsmittels des Fahrzeugs, vorzugsweise ein Fahrzeugschlüssel, insbesondere ein Funk-Fahrzeugschlüssel, zu ermitteln, die auf einen Benutzer des Fahrzeugs schließen lassen und aus den Erkennungsdaten personalisierte Daten, vorzugsweise zumindest ein personalisiertes Bild oder Video, für den Benutzer bestimmt werden, die mittels der Nachricht über den Objektkanal an den Fahrzeugscheinwerfer zur Projektion als Lichtbild vor das Fahrzeug übermittelt werden. Dadurch kann erreicht werden, dass beispielsweise eine für den Benutzer des Fahrzeugs individuell gestaltete Information oder Elemente eines Infotainment-Systems des Fahrzeugs als zweites Lichtbild vor das Fahrzeug projiziert werden können.

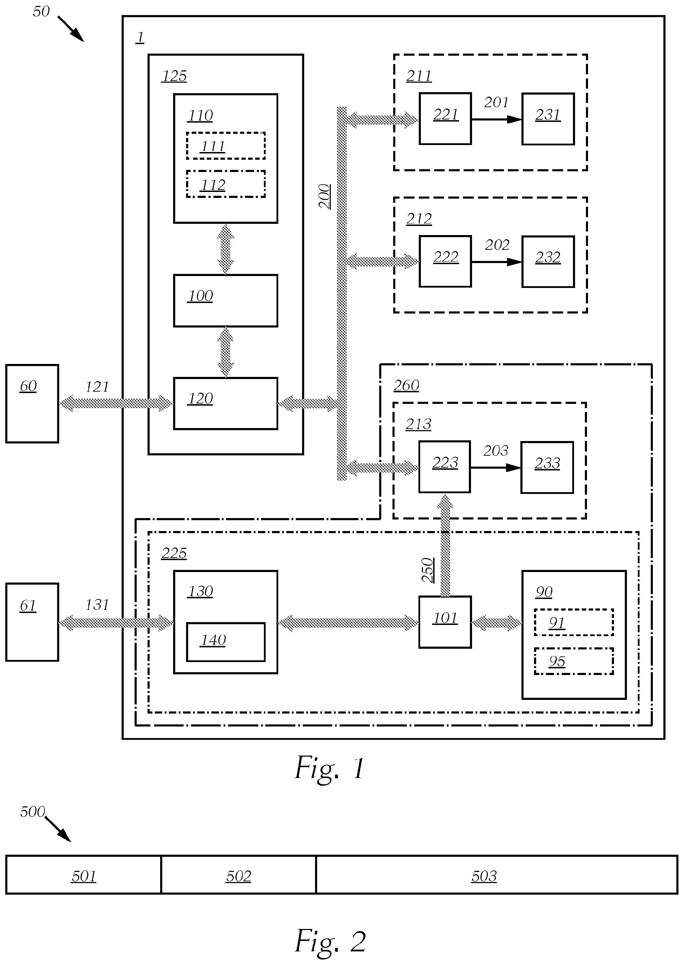

Die Erfindung und deren Vorteile werden im Folgenden anhand von nicht einschränkenden Ausführungsbeispielen näher beschrieben, die in den beiliegenden Zeichnungen veranschaulicht sind. Die Zeichnungen zeigen in
- .Fig. 1: ein Blockschaltbild einer Ausführungsform einer erfindungsgemäßen Elektronik-Architektur,
- Fig. 2: eine Darstellung einer Nachricht,
- Fig. 3: eine perspektivische Darstellung einer ersten Ausführungsform einer Anordnung von Komponenten eines Fahrzeugscheinwerfers nach der Erfindung,
- Fig. 4: eine perspektivische Darstellung einer zweiten Ausführungsform einer Anordnung von Komponenten eines Fahrzeugscheinwerfers nach der Erfindung,
- Fig. 5: eine Ansicht von vorne auf ein optoelektronisches Bauteil mit einer vergrößerten Detaildarstellung enthaltener optoelektronischer Elemente,
- Fig. 6: eine Darstellung einer Fernlicht-Lichtverteilung als projiziertes Lichtbild vor einem Fahrzeug,
- Fig. 7: eine Darstellung einer Abblendlicht-Lichtverteilung als projiziertes Lichtbild vor einem Fahrzeug,
- Fig. 8: eine Darstellung einer Fernlicht-Lichtverteilung als projiziertes Lichtbild vor einem Fahrzeug und ein Gefahrenobjekt,
- Fig. 9: eine Darstellung nach Fig. 8, in der für das Gefahrenobjekt zusätzlich eine Lichtverteilung mit Warnsymbolen projiziert ist.

Unter Bezugnahme auf **Fig. 1** bis **Fig. 9** werden nun Ausführungsbeispiele der Erfindung näher erläutert. Insbesondere sind für die Erfindung in einem Scheinwerfer wichtige Teile dargestellt, wobei klar ist, dass ein Scheinwerfer noch viele andere, nicht gezeigte Teile enthält, die einen sinnvollen Einsatz in einem Kraftfahrzeug, wie insbesondere einem PKW oder Motorrad, ermöglichen. Der Übersichtlichkeit halber sind daher beispielsweise Kühlvorrichtungen für Bauteile, weitere optische Elemente, mechanische Verstelleinrichtungen beziehungsweise Halterungen nicht gezeigt.

Um die Lesbarkeit der Beschreibung und der Ansprüche zu verbessern, wurde auf eine explizite Nennung "zumindest eines" Merkmals an mehreren Stellen verzichtet. Das Merkmal soll dennoch sowohl in einer Einzahl, als auch in einer Mehrzahl des Merkmals verwendet werden. Folglich sind diese beiden Varianten von der Beschreibung und von den Ansprüchen mit umfasst, auch wenn nicht explizit jedes Merkmal in der Mehrzahl zitiert ist.

In **Fig. 1** ist ein Ausführungsbeispiel für einen Fahrzeugscheinwerfer 1 gezeigt, der eingerichtet ist, vor einem Fahrzeug ein Lichtbild auszubilden, umfassend einen ersten Mikroprozessor 100, einen ersten Speicher 110, eine Steuerkanal-Steuereinheit 120 und erste Lichtmodule 211, 212 mit jeweils einer ersten Ausgabeeinheit 221, 222, und ein zweites Lichtmodul 213 mit einer zweiten Ausgabeeinheit 223.

Der erste Mikroprozessor 100 ist mit dem ersten Speicher 110 und der Steuerkanal-Steuereinheit 120 verbunden.

Die Steuerkanal-Steuereinheit 120 kommuniziert zum Datenaustausch mit der jeweiligen Ausgabeeinheit 221, 222, 223 der ersten und zweiten Lichtmodule 211, 212, 213. Diese Kommunikation kann über einen internen Scheinwerfer-Bus 200 erfolgen, welcher erfindungsgemäß ein CAN-Bus ist.

Die Steuerkanal-Steuereinheit 120 ist dazu eingerichtet, von einem ersten elektronischen System 60 des Fahrzeugs zumindest eine Steuernachricht über einen Steuerkanal 121 zu empfangen und an den ersten Mikroprozessor 100 zumindest teilweise weiterzuleiten, welcher mittels Teilen der Steuernachricht Steuerdaten bildet und mit den Steuerdaten zumindest einen Betriebsmodus des Fahrzeugscheinwerfers 1 steuert.

Die Steuerdaten können beispielsweise dazu verwendet werden, eine Leuchtweitenregelung oder ein Heizelement eines Fahrzeugscheinwerfers, aber auch um eine Lichtfunktion für einen Blinker, ein Fernlicht, ein Kurvenlicht, ein Signallicht, ein Abblendlicht oder ähnliches, anzusteuern.

Der erste Mikroprozessor 100 ist dazu eingerichtet, erste Lichtdaten 111, 112, welche im ersten Speicher 110 gespeichert sind, abzurufen und zu bearbeiten und an die jeweilige Ausgabeeinheit 221, 222, 223 der ersten und zweiten Lichtmodule 211, 212, 213 zu übertragen, wobei die erste und zweite Ausgabeeinheit 221, 222, 223 jeweils eingerichtet ist, ein mit der jeweiligen Ausgabeeinheit 221, 222, 223 verbundenes optoelektronisches Bauteil 231, 232, 233 mittels der ersten Lichtdaten 111, 112 anzusteuern. Die Ausgabeeinheit 221, 222, 223 kann eine elektronische Treiberschaltung sein, die an die Ansteuerung eines optoelektronischen Bauteils spezifisch angepasst ist.

Das erste Lichtmodul 211, 212 ist eingerichtet, das von einer ersten Lichtquelle emittierte Licht zumindest teilweise in Richtung zumindest einer ersten Projektionsoptik durch einen Modulator zu modulieren und ein erstes Lichtbild vor das Fahrzeug zu projizieren. Die erste Lichtquelle kann beispielsweise durch eine matrixförmige Anordnung von LEDs gebildet sein, und deren Modulation kann beispielsweise durch individuelle Ansteuerung der jeweiligen Leuchtintensität erfolgen, wie durch eine PWM (Puls-Weiten-Modulation). Alternativ kann die erste Lichtquelle auch ein konventioneller Nebelscheinwerfer sein, welcher nur über einen eingeschalteten und einen ausgeschalteten Betriebszustand verfügt.

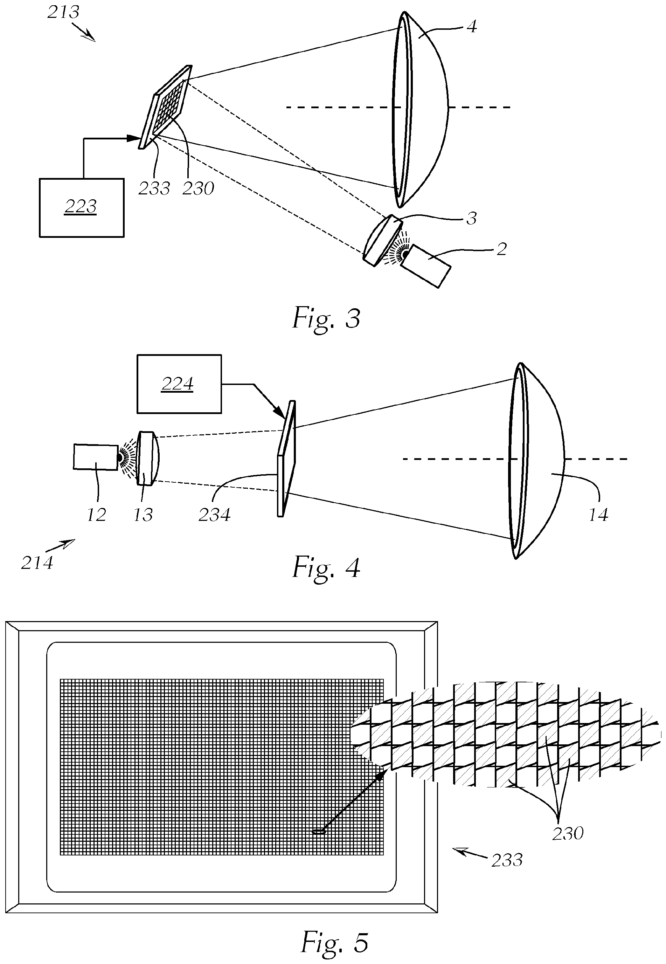

Wie aus **Fig. 3 und 4** erkennbar, umfasst das zweite Lichtmodul 213 zumindest eine zweite Lichtquelle 2, 12, ein optoelektronisches Bauteil 233, 234 in dem mehrere steuerbare optische Elemente 230, die von der jeweilig zugehörigen Ausgabeeinheit 223, 224 elektronisch angesteuert werden, angeordnet sind und zumindest eine zweite Projektionsoptik 4, 14 und die zumindest eine zweite Lichtmodul 213, 214 ist eingerichtet, das von der zweiten Lichtquelle 2, 12 emittierte Licht zu den optischen Elementen 230 des optoelektronischen Bauteils 233, 234 zu richten, und durch die optischen Elemente 230 zumindest teilweise in Richtung der zumindest einen zweiten Projektionsoptik 4, 14 zu modulieren und ein zweites Lichtbild vor das Fahrzeug zu projizieren. Das optoelektronische Bauteil 233, 234 des zweiten Lichtmoduls 213, 214 kann beispielsweise eine Mikrospiegel-Anordnung in Form eines DLP^{®} -Chips sein, welcher selektiv einfallendes Licht reflektieren kann.

Der Fahrzeugscheinwerfer 1 umfasst ferner eine Objektkanal-Steuereinheit 130, einen zweiten Mikroprozessor 101 und einen zweiten Speicher 90, wobei der zweite Mikroprozessor 101 zum Datenaustausch mit der Objektkanal-Steuereinheit 130 und dem zweiten Speicher 90 verbunden ist.

Die Objektkanal-Steuereinheit 130 ist eingerichtet, von einem zweiten elektronischen System 61 des Fahrzeugs zumindest eine Nachricht 500 über einen Objektkanal 131 zu empfangen und der zweite Mikroprozessor 101 ist eingerichtet, von der Objektkanal-Steuereinheit 130 zumindest teilweise die zumindest eine Nachricht 500 abzurufen und daraus Bilddaten zu bilden.

Der zweite Mikroprozessor 101 ist ferner eingerichtet, über einen Video-Kanal 250 die jeweilige Ausgabeeinheit 223, 224 des zumindest einen zweiten Lichtmoduls 213, 214 anzusteuern, wobei die Ausgabeeinheit 223, 224 des zumindest einen zweiten Lichtmoduls 213, 214 eingerichtet ist, aus den Steuerdaten und aus den Bilddaten des zweiten Lichtmoduls 213 gemeinsame Daten zu erzeugen, welche eine Lichtverteilung 400 eines Fahrzeugscheinwerfers beschreiben. Der Video-Kanal 250 kann beispielsweise dem HDMI-Standard ("High Definition Multimedia Interface") entsprechen und einen Video-Stream nach dem H.264-Standard zur Videokompression umfassen.

Das erste elektronische Fahrzeugsystem 60 ist in diesem Ausführungsbeispiel ein Bordnetzsteuergerät und/ oder das zweite elektronische Fahrzeugsystem 61 ein zentrales Fahrerassistenzsystem.

Die ersten Lichtmodule 211, 212 und/ oder das zweite Lichtmodul 213 weisen eine steuerbare, matrixförmigen Anordnung von Leuchtdioden oder Mikrospiegeln auf, wobei das zweite Lichtmodul 213 eine höhere Bildauflösung auf, als die ersten Lichtmodule 211, 212.

Die ersten Lichtmodule 211, 212 können folglich über den Steuerkanal 121 angesteuert werden, welcher eine niedrige Übertragungskapazität aufweist, aber trotzdem Objekte mit geringem Datenvolumen, wie beispielsweise dynamisch durch das erste und/ oder zweite elektronische Fahrzeugsystem 60, 61 generierte einfache grafische Symbole, übertragen kann.

Das zweite Lichtmodul 213 kann folglich über den Objektkanal 131 angesteuert werden, welcher eine hohe Übertragungskapazität aufweist und Objekte mit hohem Datenvolumen, wie beispielsweise detailreiche, dynamisch durch das erste und/ oder zweite elektronische Fahrzeugsystem 60, 61 generierte komplexe grafische Symbole, übertragen kann.

Im ersten und/ oder zweiten Speicher 90, 110 sind die ersten und/ oder zweiten Lichtdaten 91, 92, 111, 112 gespeichert, die zumindest eine Lichtfunktion mit jeweils einer vordefinierten Lichtverteilung 300, 301 des Fahrzeugscheinwerfers 1 und/ oder vordefinierte grafische Symbole 400 umfassen, und vorzugsweise die ersten und/ oder zweiten Lichtdaten 91, 111 vom ersten und/ oder zweiten elektronischen Fahrzeugsystem 60, 61 teilweise empfangen wurden.

Somit können Teile der ersten und/ oder zweiten Lichtdaten 91, 111, statisch im ersten und/ oder zweiten Speicher 90, 110 gespeichert sein, also fest im Scheinwerfer 1 im Zuge der Produktion einprogrammiert sein, und andere Teile der ersten und/ oder zweiten Lichtdaten 92, 112, dynamisch im ersten und/ oder zweiten Speicher 90, 110 gespeichert sein, also während des Betriebs des Scheinwerfers 1 vom ersten und/ oder zweiten elektronischen Fahrzeugsystem 60, 61 empfangen und/ oder vom ersten und/ oder zweiten Mikroprozessor 100, 101 berechnet oder bearbeitet worden sein. Dynamisch gespeicherte erste und/ oder zweite Lichtdaten 92, 112 sind somit nur während des Betriebs des Scheinwerfers 1 temporär gespeichert.

Der erste Mikroprozessor 100, der erste Speicher 110 und die Steuerkanal-Steuereinheit 120 bilden eine Scheinwerfer-Steuereinheit 125, welche eine getrennte Elektronik-Baueinheit innerhalb des Scheinwerfers 1 bilden kann. Innerhalb der Elektronik-Baueinheit kann es beispielsweise erforderlich sein, komplexe und teure Leiterplatten vorzusehen, weshalb es sinnvoll sein kann, diese Elektronik-Baueinheit separat als Modul auszuführen.

Der erste und zweite Mikroprozessor 100, 101 und/ oder der erste und zweite Speicher 90, 110 können dabei jeweils aus mehreren diskreten Halbleiter-Bauteilen bestehen, oder auch durch ein gemeinsames Prozessor-Bauteil und einen gemeinsamen Speicher, der ebenfalls auf dem gemeinsamen Prozessor-Bauteil integriert ist, gebildet sein. Somit können beispielsweise parallele Prozesse oder sogar virtuelle Prozessoren auf dem gemeinsamen Prozessor-Bauteil laufen, und der Speicher des Prozessor-Bauteils in mehrere Bereiche unterteilt sein, welche den jeweiligen parallelen Prozessen oder virtuellen Prozessoren zugeordnet sind.

Alternativ kann eine Scheinwerfer-Steuereinheit 225, wie in Fig. 1 gekennzeichnet, vorgesehen sein, die den zweiten Mikroprozessor 101, den zweiten Speicher 90 und die Objektkanal-Steuereinheit 130 umfasst und eine getrennte Baueinheit innerhalb des Scheinwerfers 1 bildet.

Zusätzlich kann eine Leucht-Baugruppe 260 vorgesehen sein, welche mit der Scheinwerfer-Steuereinheit 225 und dem zweiten Lichtmodul 213 eine getrennte Baueinheit innerhalb des Scheinwerfers 1 bildet. Dieses modulare Konzept ermöglicht die Bereitstellung eines Basis-Scheinwerfers, bei welchem bei Bedarf die Leucht-Baugruppe 260 ergänzt werden kann und durch die variable Konfigurierbarkeit des Scheinwerfers die Kosten reduziert werden können. Durch Ausführungsvarianten der Erfindung kann ein sehr modular gestaltbarer Fahrzeugscheinwerfer geschaffen werden.

Der Objektkanal kann ein Netzwerk-Kommunikationsmedium sein und beispielsweise ein Protokoll nach dem Ethernet- oder dem MOST-Bus-Standard verwenden und dabei physikalisch die Objektdaten in der LVDS-Technologie ("Low Voltage Differential Signaling") übermitteln.

Durch den Objektkanal 131 kann eine große Übertragungsbandbreite für Nachrichten 500, wie in **Fig. 2** dargestellt, gebildet werden, der darüber hinaus auch für eine Echtzeit-Übertragung konfiguriert werden kann, beispielsweise indem ein Echtzeit-Protokoll im Objektkanal 131 angewandt wird. Dazu kann die Nachricht 500 vorzugsweise unter Verwendung der TCP- oder der UDP-Technologie über den Objektkanal 131 übermittelt werden, welcher ein Zweig eines Ethernet-Netzwerks, ein Zweig eines Echtzeit-Ethernet-Netzwerks, bevorzugt nach dem Precision Time Protocol, oder ein MOST-Bus ist.

Die Lichtdaten 91, 95, 111, 112 können bei der Erzeugung des Fahrzeugscheinwerfers 1 im ersten und/ oder zweiten Speicher 90, 110 in einer Form eingespeichert sein, sodass der erste und/ oder zweite Mikroprozessor 100, 101 keine zusätzliche Bearbeitung oder Berechnung durchführen muss und die Lichtdaten 91, 95, 111, 112 direkt an die jeweilige Ausgabeeinheit 221, 222, 223 ausgegeben werden können. Die zweite Ausgabeeinheit 223 ist zusätzlich eingerichtet, sowohl vom ersten Mikroprozessor 100, als auch vom zweiten Mikroprozessor 101 jeweils Daten, beispielsweise über den Scheinwerfer-Bus 200 und den Video-Kanal 250, zu empfangen, diese Daten zu kombinieren und in Form eines gemeinsamen Lichtbilds über das optoelektronische Bauteil 233 abzubilden.

Der Steuerkanal 121 kann ein CAN-Bus sein.

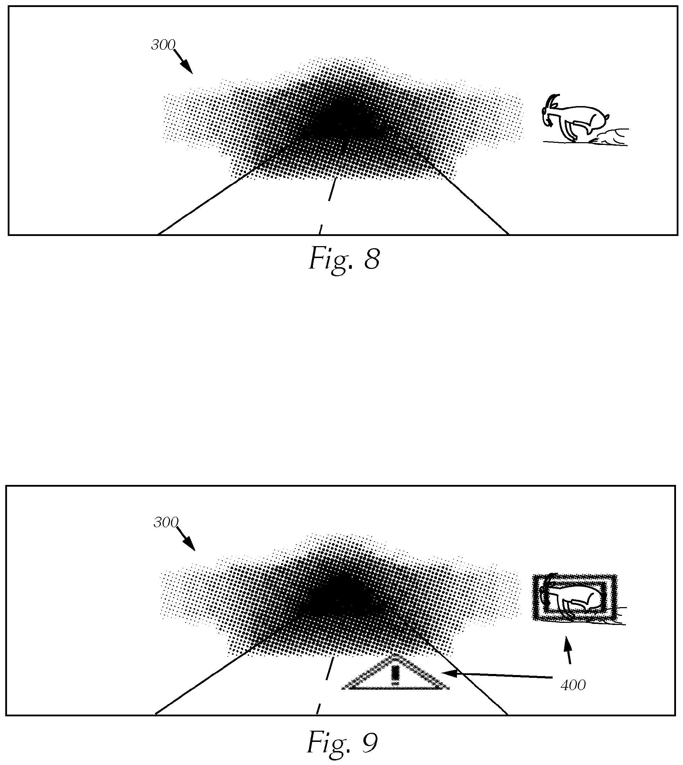

Eine Fahrzeugsteuerung 50 umfasst den zumindest einen Fahrzeugscheinwerfer 1 und ein erstes und zweites elektronisches System 60, 61, wobei das erste und zweite elektronische System 60, 61 dynamisch eine Lichtverteilung 400 (siehe Fig. 9) bestimmen, die in Form einer Nachricht 500 an den Fahrzeugscheinwerfer 1 über den Objektkanal 131 übertragen werden kann.

Das erste und/ oder zweite elektronische System 60, 61 umfassen zumindest einen Sensor, der eingerichtet ist, Sensordaten zu erfassen und daraus zumindest eine Lichtverteilung 400 bestimmt.

Der Sensor kann ein Kamera-Sensor, ein Infrarot-Sensor, ein Ultraschall-Sensor, ein Radar-Sensor, ein Positions-Sensor eines Satelliten-Navigationssystems, ein Bewegungs-Sensor, ein Beschleunigungs-Sensor, ein Rad-Sensor oder ein Magnetfeld-Sensor sein.

Ferner ist ein Erkennungssystem umfasst, das eingerichtet ist, Erkennungsdaten eines Öffnungsmittels des Fahrzeugs zu ermitteln, die auf einen Benutzer des Fahrzeugs schließen lassen. Aus den Erkennungsdaten können personalisierte Daten, vorzugsweise zumindest ein personalisiertes Bild oder Video, für den Benutzer bestimmt werden, die mittels der Nachricht 500 über den Objektkanal 131 an den Fahrzeugscheinwerfer 1 zur Projektion als Lichtbild vor das Fahrzeug übermittelt werden.

Das Öffnungsmittel des Fahrzeugs kann ein mechanischer oder elektronischer Schlüssel sein. Besonders geeignet für elektronische Schlüssel sind Funk-Fahrzeug-Schlüssel, beispielsweise in RFID-Technologie oder in Form von aktiven Transpondern, da mehrere individuelle Benutzerkennungen für dasselbe Fahrzeug leicht realisiert werden können. Alternativ können auch optische Erkennungssysteme, die beispielsweise Gesichter oder Fingerabdrücke von Fahrzeug-Benutzern detektieren können, verwendet werden.

Der Fahrzeugscheinwerfer 1 kann auch mehrere Scheinwerfer-Busse umfassen, beispielsweise einen seriellen Bus, über den eine Objektkanal-Steuereinheit mit dem Mikroprozessor verbunden ist.

Es können mehrere Komponenten des Fahrzeugscheinwerfers 1, beispielsweise der Mikroprozessor 100, der Speicher 110, die Steuerkanal- Einheit 120 und die DMA-Steuereinheit, innerhalb eines Halbleiterchips oder eines Chip-Gehäuses, beispielsweise als SoC ("System on Chip") oder SiP ("System in Package"), integriert werden.

Ein Ausführungsbeispiel der zumindest einen Nachricht 500 ist in **Fig. 2** dargestellt, welche zumindest eine Ziel-Adresse 501, zumindest eine Objekt-Identifikation 502 und zumindest eine Objekt-Beschreibung 503 umfasst. Die Objektkanal-Steuereinheit 130, wie in Fig. 1 dargestellt, kann zumindest eine Empfangskennung 140 umfassen, die der zumindest einen Ziel-Adresse 501 entspricht und vorzugsweise eine IP-Adresse ist. Der Mikroprozessor 100 ist eingerichtet, aus der Objekt-Beschreibung 503 zumindest eine Lichtmatrix 201, 202 zu bilden, welche eine Lichtverteilung eines Fahrzeugscheinwerfers repräsentiert.

Die Objekt-Adresse 501 und die Empfangskennung 140 kann beispielsweise eine Adresse "10.0.0.123" im IPv4-Netzwerk-Format sein.

Die Objekt-Beschreibung beziehungsweise das Objekt-Attribut 503 kann selbst eine Lichtmatrix umfassen.

**Fig. 3** zeigt eine erste Ausführungsform einer Baugruppe beziehungsweise einer Vorrichtung in Form eines Lichtmoduls 213 des Fahrzugscheinwerfers 1. Eine Lichtquelle 2, die beispielsweise eine Leuchtdiode oder Power-LED sowie eine Primäroptik 3 zur Bündelung eines Lichtstrahls enthalten kann, ist dazu eingerichtet, ein optoelektronisches Bauteil 233 zu beleuchten. Die Primäroptik 3 kann mehrere Optikelemente, wie Linsen, umfassen.

Das optoelektronische Bauteil 233 kann mehrere, in einer zweidimensionalen Matrix angeordnete optoelektronische Elemente 230 umfassen. In diesem ersten Ausführungsbeispiel sind die optoelektronischen Elemente 230 einzeln ansteuerbare Mikrospiegel, bei denen die Reflexionswirkung jedes einzelnen Elements der Matrix variabel einstellbar ist, beispielsweise ein DMD.

Das optoelektronische Bauteil 233 kann das einfallende Licht in Richtung einer Projektionsoptik 4 reflektieren, wobei die gesteuerten Matrixelemente, das heißt die optoelektronische Elemente 230 individuell deren Reflexionsfaktor durch Modulation der Winkel der Mikrospiegel einstellen und eine gewünschte Lichtverteilung auf den einfallenden Lichtstrahl modulieren. Die Projektionsoptik 4 ist in die Abstrahlrichtung des Fahrzeugscheinwerfers 1 orientiert und erzeugt die gewünschte Lichtverteilung vor dem Fahrzeug.

Die Ansteuerung des optoelektronischen Bauteils 233 erfolgt durch die Ausgabeeinheit 223, wobei der Mikroprozessor 100 eine gewünschte Lichtverteilung berechnen oder aus dem Speicher 110 abrufen kann, und die Ausgabeeinheit 223 die Ansteuerung der optoelektronischen Elemente 230 in Form von Steuersignalen an das optoelektronische Bauteil 233 ausgibt.

**Fig. 4** zeigt eine zweite Ausführungsform einer Baugruppe beziehungsweise einer Vorrichtung in Form eines Lichtmoduls 214 eines Fahrzugscheinwerfers 1. Eine Lichtquelle 12, die beispielsweise eine Leuchtdiode, Hochstrom-LED Power-LED oder eine Laser-Diode sowie eine Primäroptik 13 zur Bündelung des von der Lichtquelle 12 ausgehenden Lichtstrahls enthalten kann, ist dazu eingerichtet, ein optoelektronisches Bauteil 234 zu beleuchten.

Das optoelektronische Bauteil 234 umfasst mehrere, in einer zweidimensionalen Matrix angeordnete optoelektronische Elemente. In diesem zweiten Ausführungsbeispiel sind die optoelektronischen Elemente einzeln ansteuerbare lichtdurchlässige Elemente (nicht gezeigt), bei denen die Lichtdurchlasswirkung jedes einzelnen Elements der Matrix variabel einstellbar ist beispielsweise ein LCD.

Das optoelektronische Bauteil 234 kann das einfallende Licht in Richtung einer Projektionsoptik 14 durchlassen, wobei die gesteuerten Matrixelemente individuell deren Lichtdurchlässigkeit einstellen und eine gewünschte Lichtverteilung auf den einfallenden Lichtstrahl modulieren. Die Projektionsoptik 14 ist in die Abstrahlrichtung des Fahrzeugscheinwerfers 1 orientiert und erzeugt die gewünschte Lichtverteilung vor dem Fahrzeug.

Außerdem gelten die Ausführungen der Fig. 3.

In **Fig. 5** ist ein Beispiel eines optoelektronischen Bauteils 233 in Form eines DMD in Vorderansicht gezeigt. Ein vergrößerter Bildausschnitt zeigt matrixförmig angeordnete optoelektronische Elemente 230, die einzeln steuerbare Mikrospiegel umfassen, wobei in diesem Beispiel jeder zweite Mikrospiegel verkippt ist.

Neben den in Fig. 3 und Fig. 4 gezeigten Varianten des optoelektronische Bauteils 233, 234 können natürlich auch andere Technologien eingesetzt werden, die eine entsprechende Modulation des Lichtes ermöglichen, wie beispielsweise LCoS-Systeme (LCoS, "Liquid Crystal on Silicon").

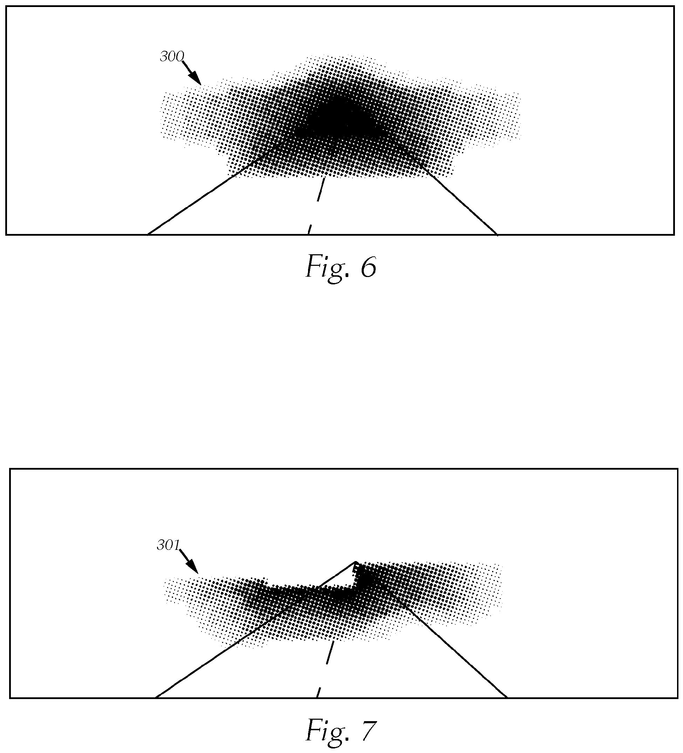

Beispiele für Lichtverteilungen des Fahrzeugscheinwerfers 1 sind durch die Fernlicht-Lichtverteilung 300 und die Abblendlicht-Lichtverteilung 301 in **Fig. 6** und **7** als Lichtbild vor dem Fahrzeug dargestellt.

In **Fig. 8** ist zusätzlich zur Fernlicht-Lichtverteilung 300 nach Fig. 5 ein Objekt, im vorliegenden Beispiel ein Wildtier, dargestellt. Eines oder mehrere elektronische Fahrzeugsysteme 60, 61 können durch zumindest einen Sensor, der ein Kamera-Sensor, ein Infrarot-Sensor, ein Ultraschall-Sensor, ein Radar-Sensor, ein Positions-Sensor eines Satelliten-Navigationssystems, ein Bewegungs-Sensor, ein Beschleunigungs-Sensor, ein Rad-Sensor oder ein Magnetfeld-Sensor sein kann, das Wildtier erfassen. Ebenso sind kombinierte Sensoren zur Erfassung von Situationen oder Gefahrenmomenten für das Fahrzeug möglich, die mehrere verschiedene Sensor-Technologien simultan verwenden.

Das durch den zumindest einen Sensor mittels Sensordaten erfasste Objekt, hier das Wildtier, kann durch zumindest das elektronische Fahrzeugsysteme 60, 61 bestimmt werden und daraus kann zumindest eine Lichtverteilung 400 bestimmt werden, wie in Fig. 9 angedeutet. Dabei kann der Fahrzeugscheinwerfer 1 beispielsweise zwei Lichtverteilungen, die Fernlicht-Lichtverteilung 300 und eine Signal-Lichtverteilung 400 in Form eines Gefahrenwarnhinweises oder einer Hervorhebung des detektierten Gefahrenmoments derart überlagern, dass neben der Grund-Lichtfunktion des Fahrzeugscheinwerfer 1 auch eine optische Signalisierung zu einer Gesamt-Lichtverteilung vereinigt werden, die über ein Lichtmodul 213 als Lichtbild vor das Fahrzeug projiziert werden können.

Alternativ kann das elektronische Fahrzeugsystem 60, 61 ferner ein Erkennungssystem umfassen, das eingerichtet ist, Erkennungsdaten eines Öffnungsmittels des Fahrzeugs zu ermitteln, die auf einen Benutzer des Fahrzeugs schließen lassen und aus den Erkennungsdaten personalisierte Daten, vorzugsweise zumindest ein personalisiertes Bild oder Video, für den Benutzer bestimmt werden, die mittels der Nachricht 500 über den Objektkanal 131 an den Fahrzeugscheinwerfer 1 zur Projektion als Lichtbild vor das Fahrzeug übermittelt wird. Auf diese Weise kann beispielsweise ein Benutzer des Fahrzeugs individuell bei der Inbetriebnahme des Fahrzeugs durch eine optische Projektion vor dem Fahrzeug begrüßt werden.

### Bezugszeichenliste:

- 1: Fahrzeugscheinwerfer
- 2, 12: Lichtquelle
- 3, 13: Primäroptik
- 4, 14: Projektionsoptik
- 50: Fahrzeugsteuerung
- 60, 61: elektronisches System des Fahrzeugs
- 100, 101: Mikroprozessor
- 90, 110: Speicher
- 91, 111: dynamische Lichtdaten
- 95, 112: statische Lichtdaten
- 120: Steuerkanal-Steuereinheit
- 121: Steuerkanal
- 125,225: Scheinwerfer-Steuereinheit
- 130: Objektkanal-Steuereinheit
- 131: Objektkanal
- 140: Empfangskennung
- 200: Scheinwerfer-Bus
- 201, 202, 203: Lichtmatrix
- 211, 212, 213, 214: Lichtmodul
- 221, 222, 223, 224: Ausgabeeinheit
- 230: steuerbares optisches Element
- 231, 232, 233, 234: optoelektronisches Bauteil
- 250: Video-Kanal
- 260: Leucht-Baugruppe
- 300, 301, 400: Lichtverteilung
- 500: Nachricht
- 501: Ziel-Adresse
- 502: Objekt-Identifikation
- 503: Objekt-Attribut bzw. Objekt-Beschreibung

## Patentansprüche

1. Fahrzeugscheinwerfer (1), der eingerichtet ist, vor einem Fahrzeug ein Lichtbild auszubilden, umfassend einen ersten Mikroprozessor (100), einen ersten Speicher (110), eine Steuerkanal-Steuereinheit (120) und zumindest ein erstes Lichtmodul (211, 212) mit jeweils einer ersten Ausgabeeinheit (221, 222), und zumindest ein zweites Lichtmodul (213, 214) mit jeweils einer zweiten Ausgabeeinheit (223, 224),
wobei der erste Mikroprozessor (100) mit dem ersten Speicher (110) und der Steuerkanal-Steuereinheit (120) verbunden ist,
und die Steuerkanal-Steuereinheit (120) mit der jeweiligen Ausgabeeinheit (221, 222, 223) des zumindest einen ersten und zweiten Lichtmoduls (211, 212, 213, 214) zum Datenaustausch kommuniziert,
und die Steuerkanal-Steuereinheit (120) dazu eingerichtet ist, von einem ersten elektronischen System (60) des Fahrzeugs zumindest eine Steuernachricht über einen Steuerkanal (121) zu empfangen und an den ersten Mikroprozessor (100) zumindest teilweise weiterzuleiten, welcher mittels Teilen der zumindest einen Steuernachricht Steuerdaten bildet und mit den Steuerdaten zumindest einen Betriebsmodus des Fahrzeugscheinwerfers (1) steuert,
wobei der Steuerkanal (121) ein CAN-Bus ist,
und der erste Mikroprozessor (100) dazu eingerichtet ist, erste Lichtdaten (111, 112), welche im ersten Speicher (110) gespeichert sind, abzurufen und zu bearbeiten und an die jeweilige Ausgabeeinheit (221, 222, 223, 224) des zumindest einen ersten und zweiten Lichtmoduls (211, 212, 213, 214) zu übertragen, wobei die erste und zweite Ausgabeeinheit (221, 222, 223, 224) jeweils eingerichtet ist, ein mit der jeweiligen Ausgabeeinheit (221, 222, 223, 224) verbundenes optoelektronisches Bauteil (231, 232, 233, 234) mittels der ersten Lichtdaten (111, 112) anzusteuern,
und das zumindest eine erste Lichtmodul (211, 212) eingerichtet ist, das von einer ersten Lichtquelle emittierte Licht zumindest teilweise in Richtung zumindest einer ersten Projektionsoptik durch einen Modulator zu modulieren und ein erstes Lichtbild vor das Fahrzeug zu projizieren,
und das zumindest eine zweite Lichtmodul (213, 214) zumindest eine zweite Lichtquelle (2, 12), ein optoelektronisches Bauteil (233, 234), in dem mehrere steuerbare optische Elemente (230), die von der zugehörigen Ausgabeeinheit (223, 224) elektronisch angesteuert werden, angeordnet sind und zumindest eine zweite Projektionsoptik (4, 14) umfasst und zumindest ein zweites Lichtmodul (213, 214) eingerichtet ist, das von der zweiten Lichtquelle (2, 12) emittierte Licht zu den optischen Elementen (230) des optoelektronischen Bauteils (233, 234) zu richten, und durch die optischen Elemente (230) zumindest teilweise in Richtung der zumindest einen zweiten Projektionsoptik (4, 14) zu modulieren und ein zweites Lichtbild vor das Fahrzeug zu projizieren,
**dadurch gekennzeichnet, dass** der Fahrzeugscheinwerfer (1) ferner eine Objektkanal-Steuereinheit (130), einen zweiten Mikroprozessor (101) und einen zweiten Speicher (90) umfasst, wobei der zweite Mikroprozessor (101) zum Datenaustausch mit der Objektkanal-Steuereinheit (130) und dem zweiten Speicher (90) verbunden ist,
und die Objektkanal-Steuereinheit (130) eingerichtet ist, von einem zweiten elektronischen System (61) des Fahrzeugs zumindest eine Nachricht (500) über einen Objektkanal (131) zu empfangen und der zweite Mikroprozessor (101) eingerichtet ist, von der Objektkanal-Steuereinheit (130) zumindest teilweise die zumindest eine Nachricht (500) abzurufen und daraus Bilddaten zu bilden,
und der zweite Mikroprozessor (101) ferner eingerichtet ist, über einen Video-Kanal (250) die jeweilige Ausgabeeinheit (223, 224) des zumindest einen zweiten Lichtmoduls (213, 214) anzusteuern, wobei die Ausgabeeinheit (223, 224) des zumindest einen zweiten Lichtmoduls (213, 214) eingerichtet ist, aus den ersten Lichtdaten und aus den Bilddaten des zumindest einen zweiten Lichtmoduls (213, 214) gemeinsame Daten zu erzeugen, welche eine Lichtverteilung (400) eines Fahrzeugscheinwerfers beschreiben,
wobei das zumindest eine erste Lichtmodul (211, 212) und/ oder das zumindest eine zweite Lichtmodul (213, 214) eine steuerbare, matrixförmigen Anordnung von Leuchtdioden oder Mikrospiegeln ist, wobei das zumindest eine zweite Lichtmodul (213, 214) eine höhere Bildauflösung aufweist, als das zumindest eine erste Lichtmodul (211, 212),
wobei im ersten und/ oder zweiten Speicher (90, 110) die ersten und/ oder zweiten Lichtdaten (91, 92, 111, 112) gespeichert sind, die zumindest eine Lichtfunktion mit jeweils einer vordefinierten Lichtverteilung (300, 301) des Fahrzeugscheinwerfers (1) und/ oder vordefinierte grafische Symbole (400) umfassen, und die ersten und/ oder zweiten Lichtdaten (91, 111) vom ersten und/ oder zweiten elektronischen Fahrzeugsystem (60, 61) teilweise empfangen wurden.

2. Fahrzeugscheinwerfer (1) nach Anspruch 1, **dadurch gekennzeichnet, dass** das erste elektronische Fahrzeugsystem (60) ein Bordnetzsteuergerät und/ oder das zweite elektronische Fahrzeugsystem (61) ein zentrales Fahrerassistenzsystem ist.

3. Fahrzeugscheinwerfer (1) nach einem der vorhergehenden Ansprüche, **dadurch gekennzeichnet, dass** die Nachricht (500) vorzugsweise unter Verwendung der TCP- oder der UDP-Technologie über den Objektkanal (131) übermittelt wird, welcher ein Zweig eines Ethernet-Netzwerks, ein Zweig eines Echtzeit-Ethernet-Netzwerks, bevorzugt nach dem Precision Time Protocol, oder ein MOST-Bus ist.

4. Fahrzeugscheinwerfer (1) nach einem der vorhergehenden Ansprüche, **dadurch gekennzeichnet, dass** die Nachricht (500) zumindest eine Ziel-Adresse (501), zumindest eine Objekt-Identifikation (502) und zumindest eine Objekt-Beschreibung (503) umfasst, und die Objektkanal-Steuereinheit (130) zumindest eine Empfangskennung (140) umfasst, die der Ziel-Adresse (501) entspricht und vorzugsweise eine IP-Adresse ist.

5. Fahrzeugscheinwerfer (1) nach Anspruch 4, **dadurch gekennzeichnet, dass** der zweite Mikroprozessor (101) eingerichtet ist, aus der Objekt-Beschreibung (503) zumindest eine Lichtmatrix (201, 202) zu bilden, welche eine Lichtverteilung eines Fahrzeugscheinwerfers repräsentiert.

6. Fahrzeugscheinwerfer (1) nach einem der Ansprüche 4 oder 5, **dadurch gekennzeichnet, dass** die Objekt-Beschreibung (503) selbst eine Lichtmatrix umfasst.

7. Fahrzeugsteuerung (50), **umfassend** zumindest einen Fahrzeugscheinwerfer (1) nach einem der vorhergehenden Ansprüche, wobei das erste und zweite elektronische System (60, 61) dynamisch eine Lichtverteilung (400) bestimmen, die in Form der Steuernachricht und der Nachricht (500) an den Fahrzeugscheinwerfer (1) über den Objektkanal (131) übertragen wird.

8. Fahrzeugsteuerung (50) nach Anspruch 7, **dadurch gekennzeichnet, dass** das erste und zweite elektronische System (60, 61) zumindest einen Sensor umfassen, der eingerichtet ist, Sensordaten zu erfassen und daraus zumindest eine Lichtverteilung (400) bestimmt.

9. Fahrzeugsteuerung (50) nach Anspruch 8, **dadurch gekennzeichnet, dass** der Sensor ein Kamera-Sensor, ein Infrarot-Sensor, ein Ultraschall-Sensor, ein Radar-Sensor, ein Positions-Sensor eines Satelliten-Navigationssystems, ein Bewegungs-Sensor, ein Beschleunigungs-Sensor, ein Rad-Sensor oder ein Magnetfeld-Sensor ist.

10. Fahrzeugsteuerung (50) nach einem der Ansprüche 7 bis 9, **gekennzeichnet durch** ein ferner umfasstes Erkennungssystem, das eingerichtet ist, Erkennungsdaten eines Öffnungsmittels des Fahrzeugs, vorzugsweise ein Fahrzeugschlüssel, zu ermitteln, die auf einen Benutzer des Fahrzeugs schließen lassen und aus den Erkennungsdaten personalisierte Daten, vorzugsweise zumindest ein personalisiertes Bild oder Video, für den Benutzer bestimmt werden, die mittels der Nachricht (500) über den Objektkanal (131) an den Fahrzeugscheinwerfer (1) zur Projektion als zweites Lichtbild vor das Fahrzeug übermittelt wird.

## Claims

1. Vehicle headlamp (1) which is arranged to form a light image in front of a vehicle, comprising a first microprocessor (100), a first memory (110), a control channel control unit (120) and at least one first light module (211, 212) each having a first output unit (221, 222), and at least one second light module (213, 214) each having a second output unit (223, 224)
wherein the first microprocessor (100) is connected to the first memory (110) and the control channel control unit (120)
and the control channel control unit (120) communicating with the respective output unit (221, 222, 223) of the at least one first and second light module (211, 212, 213, 214) for exchanging data and the control channel control unit (120) is set up to receive at least one control message from a first electronic system (60) of the vehicle via a control channel (121) and to forward it at least partially to the first microprocessor (100), which forms control data by means of parts of the at least one control message and uses the control data to control at least one operating mode of the vehicle headlamp (1),
wherein the control channel (121) is a CAN bus,
and the first microprocessor (100) is arranged to retrieve and process first light data (111, 112) stored in the first memory (110) and to transmit the first light data to the respective output unit (221, 222, 223, 224) of the at least one first and second light module (211, 212, 224).
light module (211, 212, 213, 214), wherein the first and second output units (221, 222, 223, 224) are each set up to drive an optoelectronic component (231, 232, 233, 234) connected to the respective output unit (221, 222, 223, 224) by means of the first light data (111, 112),
and the at least one first light module (211, 212) is set up to modulate the light emitted by a first light source at least partially in the direction of at least one first projection optic by means of a modulator and to project a first light image in front of the vehicle
and the at least one second light module (213, 214) comprises at least one second light source (2, 12), an optoelectronic component (233, 234) in which a plurality of controllable optical elements (230), which are electronically controlled by the associated output unit (223, 224), are arranged and at least one second projection optics (4, 14), and at least one second light module (213, 214) is set up to direct the light emitted by the second light source (2, 12) to the optical elements (230) of the optoelectronic component (233, 234) and to modulate it at least partially in the direction of the at least one second projection optics (4, 14) by means of the optical elements (230) and to project a second light image in front of the vehicle,
**characterized in that** the vehicle headlamp (1) further comprises an object channel control unit (130), a second microprocessor (101) and a second memory (90), the second microprocessor (101) being connected to the object channel control unit (130) and the second memory (90) for data exchange
and the object channel control unit (130) is arranged to receive from a second electronic system (61) of the vehicle at least one message (500) via an object channel (131), and the second microprocessor (101) is arranged to retrieve from the object channel control unit (130) at least in part the at least one message (500) and to form therefrom image data
and the second microprocessor (101) is further arranged to control the respective output unit (223, 224) of the at least one second light module (213, 214) via a video channel (250), wherein the output unit (223, 224) of the at least one second
light module (213, 214) is set up to generate common data from the first light data and from the image data of the at least one second light module (213, 214), which data describe a light distribution (400) of a vehicle headlight,
wherein the at least one first light module (211, 212) and/or the at least one second light module (213, 214) is a controllable, matrix-shaped arrangement of light-emitting diodes or micromirrors, wherein the at least one second light module (213, 214) has a higher image resolution than the at least one first light module (211, 212),
the first and/or second memory (90, 110) storing the first and/or second light data (91, 92, 111, 112) which comprise at least one light function with in each case a predefined light distribution (300, 301) of the vehicle headlight (1) and/or predefined graphic symbols (400), and the first and/or second light data (91, 111) having been partially received by the first and/or second electronic vehicle system (60, 61).

2. Vehicle headlamp (1) according to claim 1, **characterized in that** the first electronic vehicle system (60) is an on-board network control unit and/or the second electronic vehicle system (61) is a central driver assistance system.

3. Vehicle headlamp (1) according to one of the preceding claims, **characterized in that** the message (500) is transmitted preferably using TCP or UDP technology via the object channel (131), which is a branch of an Ethernet network, a branch of a real-time Ethernet network, preferably according to the Precision Time Protocol, or a MOST bus.

4. Vehicle headlamp (1) according to any of the preceding claims, **characterized in that** the message (500) comprises at least one destination address (501), at least one object identification (502) and at least one object description (503), and the object channel control unit (130) comprises at least one reception identifier (140) corresponding to the destination address (501) and is preferably an IP address.

5. Vehicle headlamp (1) according to claim 4, **characterized in that** the second microprocessor (101) is arranged to form from the object description (503) at least one light matrix (201, 202) representing a light distribution of a vehicle headlamp.

6. Vehicle headlamp (1) according to one of claims 4 or 5, **characterized in that** the object description (503) itself comprises a light matrix.

7. Vehicle control system (50) comprising at least one vehicle headlamp (1) according to any one of the preceding claims, wherein the first and second electronic systems (60, 61) dynamically determine a light distribution (400), which is transmitted in the form of the control message and the message (500) to the vehicle headlamp (1) via the object channel (131).

8. Vehicle control system (50) according to claim 7, **characterized in that** the first and second electronic systems (60, 61) comprise at least one sensor that is set up to detect sensor data and determine at least one light distribution (400) therefrom.

9. Vehicle control system (50) according to claim 8, **characterized in that** the sensor is a camera sensor, an infrared sensor, an ultrasonic sensor, a radar sensor, a position sensor of a satellite navigation system, a motion sensor, an acceleration sensor, a wheel sensor or a magnetic field sensor.

10. Vehicle control (50) according to one of the claims 7 to 9, **characterized by** a further comprising recognition system which is set up to determine recognition data of an opening means of the vehicle, preferably a vehicle key, which are indicative of a user of the vehicle, and personalized data, preferably at least one personalized image or video, for the user are determined from the recognition data, which are transmitted by means of the message (500) via the object channel (131) to the vehicle headlight (1) for projection as a second light image in front of the vehicle.

## Revendications

1. Projecteur de véhicule (1) adapté pour former une image lumineuse devant un véhicule, comprenant un premier microprocesseur (100), une première mémoire (110), une unité de commande de canal de commande (120) et au moins un premier module lumineux (211, 212) ayant chacun une première unité de sortie (221, 222), et au moins un deuxième module lumineux (213, 214) ayant chacun une deuxième unité de sortie (223, 224),
le premier microprocesseur (100) étant connecté à la première mémoire (110) et à l'unité de commande de canal de commande (120),
et l'unité de commande de canal de commande (120) communique avec l'unité de sortie respective (221, 222, 223) d'au moins un premier et un deuxième module de lumière (211, 212, 213, 214) pour l'échange de données,
et l'unité de commande de canal de commande (120) est agencée pour recevoir d'un premier système électronique (60) du véhicule au moins un message de commande par l'intermédiaire d'un canal de commande (121) et pour le transmettre au moins partiellement au premier microprocesseur (100), qui forme des données de commande au moyen de parties de l'au moins un message de commande et commande au moins un mode de fonctionnement du phare de véhicule (1) avec les données de commande,
le canal de commande (121) étant un bus CAN,
et le premier microprocesseur (100) est conçu pour appeler et traiter des premières données d'éclairage (111, 112), qui sont mémorisées dans la première mémoire (110), et les transmettre à l'unité de sortie respective (221, 222, 223, 224) d'au moins un premier et un deuxième module d'éclairage.
module de lumière (211, 212, 213, 214), la première et la deuxième unité de sortie (221, 222, 223, 224) étant respectivement conçues pour commander un composant optoélectronique (231, 232, 233, 234) relié à l'unité de sortie respective (221, 222, 223, 224) au moyen des premières données de lumière (111, 112),
et l'au moins un premier module de lumière (211, 212) est conçu pour moduler la lumière émise par une première source de lumière au moins partiellement en direction d'au moins une première optique de projection par un modulateur et pour projeter une première image lumineuse devant le véhicule,
et le au moins un deuxième module de lumière (213, 214) comprend au moins une deuxième source de lumière (2, 12), un composant optoélectronique (233, 234) dans lequel sont disposés plusieurs éléments optiques commandables (230) qui sont commandés électroniquement par l'unité de sortie correspondante (223, 224) et au moins une deuxième optique de projection (4, 14) et au moins un deuxième module de lumière (213, 214) est conçu pour diriger la lumière émise par la deuxième source lumineuse (2, 12) vers les éléments optiques (230) du composant optoélectronique (233, 234), et pour la moduler au moins partiellement par les éléments optiques (230) en direction de la au moins une deuxième optique de projection (4, 14) et pour projeter une deuxième image lumineuse devant le véhicule,
**caractérisé en ce que** le projecteur de véhicule (1) comprend en outre une unité de commande de canal d'objet (130), un second microprocesseur (101) et une seconde mémoire (90), le second microprocesseur (101) étant connecté pour échanger des données avec l'unité de commande de canal d'objet (130) et la seconde mémoire (90),
et l'unité de commande de canal d'objet (130) est agencée pour recevoir d'un deuxième système électronique (61) du véhicule au moins un message (500) par l'intermédiaire d'un canal d'objet (131) et le deuxième microprocesseur (101) est agencé pour extraire de l'unité de commande de canal d'objet (130) au moins partiellement ledit au moins un message (500) et pour former des données d'image à partir de celui-ci,
et le deuxième microprocesseur (101) est en outre agencé pour commander, par l'intermédiaire d'un canal vidéo (250), l'unité de sortie respective (223, 224) de l'au moins un deuxième module d'éclairage (213, 214), l'unité de sortie (223, 224) de l'au moins un deuxième module d'éclairage (213, 214) étant agencée pour commander l'unité de sortie (223, 224) de l'au moins un deuxième module d'éclairage (214).
module d'éclairage (213, 214) est conçue pour générer, à partir des premières données d'éclairage et des données d'image du au moins un deuxième module d'éclairage (213, 214), des données communes qui décrivent une répartition de la lumière (400) d'un phare de véhicule,
l'au moins un premier module d'éclairage (211, 212) et/ou l'au moins un deuxième module d'éclairage (213, 214) étant un agencement matriciel contrôlable de diodes électroluminescentes ou de micromiroirs, l'au moins un deuxième module d'éclairage (213, 214) présentant une résolution d'image plus élevée que l'au moins un premier module d'éclairage (211, 212),
les premières et/ou deuxièmes données d'éclairage (91, 92, 111, 112) étant mémorisées dans la première et/ou la deuxième mémoire (90, 110), lesquelles comprennent au moins une fonction d'éclairage avec respectivement une répartition lumineuse prédéfinie (300, 301) du projecteur de véhicule (1) et/ou des symboles graphiques prédéfinis (400), et les premières et/ou deuxièmes données d'éclairage (91, 111) ayant été partiellement reçues par le premier et/ou le deuxième système électronique de véhicule (60, 61).

2. Projecteur de véhicule (1) selon la revendication 1, **caractérisé en ce que** le premier système électronique de véhicule (60) est un calculateur de réseau de bord et/ou le deuxième système électronique de véhicule (61) est un système central d'assistance à la conduite.

3. Projecteur de véhicule (1) selon l'une quelconque des revendications précédentes, **caractérisé en ce que** le message (500) est transmis de préférence en utilisant la technologie TCP ou UDP sur le canal objet (131) qui est une branche d'un réseau Ethernet, une branche d'un réseau Ethernet temps réel, de préférence selon le protocole de temps de précision, ou un bus MOST.

4. Projecteur de véhicule (1) selon l'une quelconque des revendications précédentes, **caractérisé en ce que** le message (500) comprend au moins une adresse de destination (501), au moins un identifiant d'objet (502) et au moins une description d'objet (503), et l'unité de commande de canal d'objet (130) comprend au moins un identifiant de réception (140) correspondant à l'adresse de destination (501) est de préférence une adresse IP.

5. Projecteur de véhicule (1) selon la revendication 4, **caractérisé en ce que** le deuxième microprocesseur (101) est agencé pour former, à partir de la description d'objet (503), au moins une matrice de lumière (201, 202) représentant une distribution de lumière d'un projecteur de véhicule.

6. Projecteur de véhicule (1) selon l'une des revendications 4 ou 5, **caractérisé en ce que** la description d'objet (503) comprend elle-même une matrice lumineuse.

7. Commande de véhicule (50) comprenant au moins un projecteur de véhicule (1) selon l'une des revendications précédentes, dans laquelle les premier et deuxième systèmes électroniques (60, 61) déterminent dynamiquement une répartition lumineuse (400) qui est transmise sous la forme du message de commande et du message (500) au projecteur de véhicule (1) via le canal d'objet (131).

8. Commande de véhicule (50) selon la revendication 7, **caractérisée en ce que** les premier et deuxième systèmes électroniques (60, 61) comprennent au moins un capteur agencé pour acquérir des données de capteur et déterminer à partir de celles-ci au moins une répartition de lumière (400).

9. Commande de véhicule (50) selon la revendication 8, **caractérisée en ce que** le capteur est un capteur de caméra, un capteur infrarouge, un capteur à ultrasons, un capteur radar, un capteur de position d'un système de navigation par satellite, un capteur de mouvement, un capteur d'accélération, un capteur de roue ou un capteur de champ magnétique.

10. Commande de véhicule (50) selon l'une quelconque des revendications 7 à 9, **caractérisée par** un système de reconnaissance comprenant en outre des moyens agencés pour déterminer des données de reconnaissance d'un moyen d'ouverture du véhicule, de préférence une clé de véhicule, qui permettent de conclure à un utilisateur du véhicule, et pour déterminer à partir des données de reconnaissance des données personnalisées, de préférence au moins une image ou une vidéo personnalisée, pour l'utilisateur, qui est transmise au moyen du message (500) par l'intermédiaire du canal d'objet (131) au projecteur de véhicule (1) pour être projetée en tant que deuxième image lumineuse devant le véhicule.
